(19) Europäisches Patentamt / European Patent Office / Office européen des brevets

(11) **EP 4 246 109 A1**

(12) **EUROPEAN PATENT APPLICATION**

(43) Date of publication:
**20.09.2023 Bulletin 2023/38**

(21) Application number: **22162555.1**

(22) Date of filing: **16.03.2022**

(51) International Patent Classification (IPC):
**G01K 17/00** *(2006.01)*   **G01K 17/04** *(2006.01)*
**G01N 25/48** *(2006.01)*

(52) Cooperative Patent Classification (CPC):
**G01K 17/04; G01K 17/00; H01M 10/4285;**
H01M 10/486; H01M 10/615; H01M 10/6571;
H01M 10/658

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Crino GmbH
80807 München (DE)**

(72) Inventor: **Bauer, Felix
80798 München (DE)**

(74) Representative: **Meissner Bolte Partnerschaft
mbB
Patentanwälte Rechtsanwälte
Postfach 86 06 24
81633 München (DE)**

(54) **TEST SYSTEM FOR AT LEAST ONE BATTERY CELL**

(57) The disclosure relates to a test system (100) for a battery cell (T). The test system (100) comprises one measurement compartment (102) with a battery receptacle (104) adapted for accepting a battery holder (110) and a reference receptacle (106) adapted for accepting a reference holder (110'). Further, the test system comprises a temperature sensor unit (103) and an evaluation unit (114). The temperature sensor unit (103) may measure a temperature difference between the battery cell (T) in the battery holder (110) and the reference element (R) in the reference holder (110'). The evaluation unit (114) is electrically coupled to the temperature sensor unit (103) and adapted to determine the temperature difference between the battery cell (T) and the reference element (R) during a measurement. The test system (100) is characterized by a thermal shield (112) partially shielding and/or surrounding the measurement compartment (102) adapted to mitigate temperature disturbances therein.

Figure 1

## Description

### Field of the invention

The present invention relates to the field of calorimetry and more particularly to a test system for at least one battery cell. The invention further relates to a kit with such a test system. Furthermore, the invention relates to the use of such a test system.

### Technical field

Calorimetry technics aim to measure changes in state variables, e.g. in temperature, of a body. Based thereon a heat transfer may be derived. Calorimetry is broadly used to measure the heat flow emitted by a test specimen as e.g. a test battery cell.

Currently only very few calorimeters are adapted to lithium-ion cells. The existing calorimeters for battery cells may be divided into two groups. The first group comprises calorimeters that can measure high heat emissions, which are e.g. used for battery safety tests. Such a system is described by CN 112394084 A. The second group comprises calorimeters that can measure relatively low heat emissions, which are used for functional and quality tests (see e.g. "A microcalorimeter for measuring self-discharge of pacemakers and pacemaker power cells" from Prosen et al. published by National Bureau of Standards in January 1980).

Calorimeters of the second group could possibly be used for lithium ion battery cells. Due to their size, most solutions on the market focus, however, on coin cells. Moreover, measuring small heat flows, as emitted by battery cells due to their self-discharge rate, may be very challenging. Therefore, some known calorimeters belonging to said second group may use a differential measurement principle, whereby the devices usually contain crucibles for a probe and for a reference. Such calorimeters are described by WO 2011/060768 A1 or WO 2021/101710 A1. Solutions for measuring the heat emitted by large format battery cells mostly do not use a differential measurement principle, as described by CH 711926 A1 or DE 202019101393 U1.

Known calorimeters capable of measuring small heat flows may further be very complex and hence their production may be very expensive. In addition, it is noted that no known calorimeter are specifically adapted or designed for large-format batteries such as for example car's batteries.

### Summary of the invention

It is an object of the present invention to provide for an improved test system for at least one battery cell, which at least mitigate some of the above-mentioned drawbacks of conventional systems and procedures. Merely as examples, it is an object of the present to allow low-cost heat measurement for large format battery and/or to allow heat measurement of lithium ion battery cells used in cars.

The subject matter of the independent claims solves the object of the present invention, wherein further embodiments are indicated by the dependent claims and by the following description.

According to a first aspect of the present disclosure, there is provided a test system for at least one battery cell. The test system comprises:

- at least one measurement compartment with at least one battery receptacle adapted for accepting at least one battery holder and at least one reference receptacle adapted for accepting at least one reference holder;

- at least one temperature sensor unit arranged to measure a temperature difference between at least one battery cell in the at least one battery holder and at least one reference element in the at least one reference holder;

- an evaluation unit electrically coupled to the at least one temperature sensor unit and adapted to determine the temperature difference between the at least one battery cell in the at least one battery holder and the at least one reference element in the at least one reference holder during a measurement.

The test system is characterized by a thermal shield at least partially shielding and/or surrounding the at least one measurement compartment adapted to mitigate temperature disturbances in the at least one measurement compartment.

The test system may be characterized in that it is based on a passive and optionally on an active filtering of temperature fluctuations. This may allow reducing the requirements for the temperature measurement without however affecting the accuracy of the measurement. An active filter may for example be provided by heating element(s).

In other words, in order to provide a precise, efficient and cost-effective test system for at least one battery, a system may be provided which may be configured to measure and/or test a heat flow between a reference element and a battery cell, wherein the test system may comprise at least two layers, which actively and/or passively reduce the impact of the ambiance of the measurement, i.e. temperature fluctuations. One layer may be defined as the area or volume outward the thermal shield, and another layer may be defined as the area or volume inside the thermal shield, e.g. inside the measurement compartment. The term "layer" may merely be used such as to designate a difference in thermal capacity of the corresponding materials.

The test system as described hereinabove and hereinafter offers a cost efficient solution for measuring the heat emitted by battery cell(s). It has been found that compared to existing solutions for battery cells the invention offers a higher measuring resolution and accuracy while being highly scalable at the same time. The design of the test system further allows avoiding using individual heating elements for the reference element and the battery cell.

The expression "test system" is to be understood broadly in the context of the present disclosure. It may designate a measurement system, a heat flow measurement system, a battery test system or more specifically a differential calorimeter. In particular, the test system as described hereinabove and hereinafter may be comprised in one or more units. In general, the test system may be configured to test, measure and/or evaluate a heat loss, a heat change and/or self-discharge of the test cell.

The term "measurement compartment" is to be understood broadly in the context of the present disclosure too. It may designate a volume, a case or a box generally configured to receive a battery cell and a reference element. Further, the measurement compartment may have a different thermal conductivity than the rest of the test system. It is noted that the test system may comprise two or more measurement compartments within the thermal shield. Hence, the test system may be used with multiple measurement operations at the same time. Each compartment may hence be configured to receive a battery cell and a reference element.

The temperature sensor unit may designate one temperature sensor and/or a group of temperature sensors and/or a combination of different electrical and/or mechanical components connected with a temperature sensor. It is noted that the temperature sensor unit may comprise a temperature sensor of a resistance type, for example based on a positive temperature coefficient of resistance, in particular of type PT1000. By using two sensors, for example two PT1000 sensors, the temperature difference may be measured without expensive thermocouples or thermopiles (Peltier elements).

The evaluation unit may be designed and/or configured such as to detect and evaluate sensor signals of one or more temperature sensors of the temperature sensor unit. Optionally, the evaluation unit may further be configured to activate a temperature control unit if required based on the evaluated sensor signals.

Turning to the thermal shield, it is noted, that it may be configured with a closed housing of material with good thermal conductivity. A good thermal conductivity may e.g. be greater or equal to 40 W / (m·K), greater or equal to 45 W / (m·K) or greater or equal to 50 W / (m·K). The thermal shield may hence ensure that any disturbance caused by variation of the ambient temperature is equally influencing the reference element and the battery cell. The thermal shield may passively shield temperature disturbance and/or fluctuation, which may negatively influence a temperature measurement. In other words, the thermal shied may not be controlled and may only work by its thermal conductivity.

To further reduce thermal disturbances possibly acting on the battery cell and/or the reference element, the thermal shield may be surrounded by material of low thermal conductivity, which may also define the mechanical position of the thermal shield within the test system. A material of low thermal conductivity may have a conductivity below or equal to 1 W / (m K) or below or equal to 0,5 W / (m K).

The expression "battery cell" may designate any kind or type of battery suitable for the test system. In general, in the context of the present disclosure, the battery cell may be referred to as a test specimen, a test battery or the like. The reference element may designate, in contrast to the battery cell, any specimen, battery, cell or passive element, which preferably does not emit any heat. In other words, the reference element may be a different specimen merely serving as a reference specimen, such as a passive block made of aluminum.

Throughout the specification it may be referred to the battery cell as the battery cell to be tested. This may indicate that the test system may in general be configured such as to mainly focus on temperature changes of the battery cell with respect to the reference element. By doing so, the discharge and/or any thermodynamic processes of the battery cell may be tested or measured such as to measure the rapidity and/or the magnitude of the discharge of the battery cell. Thermal measurement may be used to measure any thermodynamic processes and/or a discharge of the battery cell. However, thermodynamic processes that are not due to a discharge and are therefore difficult to detect in the voltage signal of the battery cell may be of particular interest.

It is further noted that a measurement may in general refer to a temperature measurement and/or a measurement during which the loss in heat, the heat flow, the heat change and/or the discharge of the battery cell is measured, tested and/or recorded.

According to an embodiment, the test system may comprise a temperature control unit comprising at least one heating element adapted to control a measurement temperature in the at least one measurement compartment during a measurement. Further, the temperature control unit may be adapted to set a measurement temperature different from the ambient temperature (e. g. higher) and/or to maintain a constant temperature and reduce variations of ambient temperature.

In other words, the temperature control unit may consist of heating elements such as heating films, heating wires or Peltier elements. The temperature control unit may allow setting a measurement temperature of the test system, e.g. different from the ambient temperature.

The temperature control unit and/or the heating element may in general be placed outwardly of the thermal shield. The heating element may adopt different shapes. The shape of the heating element may be chosen such as to be adapted to the shape of the battery cell and/or reference element to be tested.

According to an embodiment the at least one reference holder and/or the at least one battery holder may be each configured to receive the at least one battery cell and/or the at least one reference element with a snug fit, respectively.

Alternatively or in addition, the respective receptacle of the measurement compartment may also be configured to receive the respective holder with a snug fit.

According to an embodiment the at least one reference receptacle and/or the at least one battery receptacle may each comprise a side wall and a base wall, wherein the at least one battery receptacle and the at least one reference receptacle are arranged such that the side walls are at least substantially parallel to one another, wherein the side walls preferably form the largest surfaces of the respective receptacle.

In order words, the two receptacles may define the position of the battery cell and the reference element within the test system such that the battery cell and the reference element may be arranged in such way that the largest surface of the battery cell and of the reference element are arranged at least substantially parallel to each other.

According to an embodiment the at least one reference receptacle and/or the at least one battery receptacle may each comprise at least one recess in the side, in particular two recesses in the side wall and an opposite side wall, more in particular of the shape of a quarter sphere.

Such a recess may facilitate a user the loading and unloading of a battery cell and/or a reference element from the measurement compartment. The user may hence better grip the battery cell and/or the reference element being in their respective receptacle.

According to an embodiment the test system may further be characterized by at least one battery holder that may be adapted to be inserted into the at least one battery receptacle and/or at least one reference holder that may be adapted to be inserted into the at least one reference receptacle.

The at least one battery holder and/or the at least one reference holder may hence be removable from the test system. In an exemplary embodiment, the battery cell and the reference element are both at least partially encased by a holder, which may be comprised of several parts, such as two shells for example.

Using such holder may allow a simple loading and defined position of the battery cell in the test system while at the same time ensuring a defined thermal connection between a temperature sensor and the battery cell.

According to an embodiment the test system may further be characterized by at least one battery cell and/or at least one reference element, wherein in this case the at least one battery holder and/or the at least one reference holder is adapted such as to allow the insertion of the at least one battery cell and/or the at least one reference element therein.

It is noted that the battery cell and the reference element may solely be differentiated from each other by their thermal radiation. Alternatively or in addition, the battery cell and the reference element may solely be differentiated through their role within the determination of the temperature difference, e.g. which one is considered as delivering the reference temperature values and/or which is a passive element. In principle, the reference element may be a battery cell, which must, however, not emit any heat. The reference element may alternatively be different than the battery cell, for example a solid block of aluminum or of other material. Both cases are conceivable. Some adjustment in the evaluation unit may possibly be needed, depending on the used reference element.

According to an embodiment the temperature sensor unit comprises at least one sensor plate with a temperature sensor attached to an inside wall defined by the reference holder and/or the battery holder. Alternatively or in addition, the temperature sensor unit may comprise a Wheatstone bridge electrically coupled to a/the sensor plates of the reference and/or battery holders, wherein the sensor plates in particular each may comprise at least one resistance based temperature sensor. It is however noted, that the Wheatstone bridge may be multiplexed, therefore said bridge may not have to be assigned to each sensor plate.

Such a plate may be made out of thermally conductive material in order to further improve the accuracy of the temperature measurement. The temperature sensor attached to the inside wall defined by the respective holder may be any kind of known temperature sensor such as for example a PT1000 sensor.

According to an embodiment the at least one battery holder and/or the at least one reference holder may comprise of two half-shells with a bias-element adapted to pull the half-shells against each other such that a/the temperature sensor is pushed against a reference element and/or battery cell when inserted into the battery holder or reference holder, respectively. A bias-element may be a spring-element or an element made of a soft-foam, which is compressible and could thereby compresses and hold the respective half-shell in place.

The two half-shells of the respective holder may be designed to reflect the outer geometry of the battery cell. The respective holder may hence ensure that at least one temperature sensor and/or one sensor plate is always in thermally conductive contact with the battery cell and the reference element, respectably. This may be ensured even if the battery cell loaded in the receptacle and hence the holder varies in its thickness.

According to an embodiment the thermal shield may comprise openings for the at least one reference holder and the at least one battery holder.

For example, the thermal shield may be provided with a removable lid, which can be opened to load and unload the battery cell and/or the reference element in the respective receptacle, i.e. holders. If insulation material covers the holders, it may be attached to the lid so that opening the lid enables loading a battery cell and/or reference element directly.

In other words, at least one removable lid covering the opening for the at least one reference holder and/or the at least one battery holder may be provided. The material surrounding the at least one reference and/or at least battery holder may be attached to the removable lid.

According to an embodiment, the thermal shield is in particular of a material of thermal conductivity above or equal to 40 W/(m·K). Alternatively or in addition, a/the space between the thermal shield and the at least one reference receptacle and at least one battery receptacle may be filled with a material of low thermal conductivity, in particular polyurethane based foam.

A material of low thermal conductivity may for example be any material of thermal conductivity below or equal to 1 W / (m·K), below or equal to 0,5 W / (m·K), below or equal to below or equal to 0,2 W / (m·K).

According to an embodiment, the at least one reference receptacle and the at least one battery receptacle may be arranged symmetrically to a plane at least substantially parallel to side walls of the receptacles through the center of the measurement compartment in the at least one measurement compartment with the thermal shield surrounding the at least one measurement compartment.

According to an embodiment, a/the thermal shield may define a test vessel comprising multiple measurement compartments of the test system, wherein each measurement compartment comprises a respective at least one battery receptacle adapted for accepting at least one battery holder and at least one respective reference receptacle adapted for accepting at least one reference holder.

According to an embodiment, the heating element may be arranged at least substantially in parallel to the side walls of the receptacles. Alternatively or in addition, the heating element may be integrated in the thermal shield. Further alternatively or in addition, an isolation layer may be arranged between the thermal shield and the heating element. That is, isolation layers may reduce the influence of temperature fluctuations, while a/the thermal shield has capacity and thermal conductivity.

Arranging the heating element(s) within the thermal shield may further enhance the cost-efficiency of the test system.

According to an embodiment, the heating element may be configured as a ring element spiraling around a/the thermal shield. That is, the heating element may be circumferentially formed and may surround the thermal shield.

According to an embodiment, the temperature control unit may be adapted to activate a temperature sensor and/or the heating element.

The temperature control unit may for example comprise a multiplexer adapted to actuate a/the temperature sensor at predetermined time intervals or events. Latter temperature sensor may be hence accordingly be placed outside the measurement compartment.

The test system may hence work according to two effects: due to the increased conductivity compared to the surrounding isolation material, any introduced disturbance may be evenly distributed to the battery cell and the reference element and due to the heat capacity, "short/small" fluctuations may be buffered.

According to an embodiment, the test system may further be characterized by a case surrounding a/the thermal shield defining the mechanical position of the thermal shield, wherein the case is in particular made of material of low conductivity.

In particular, the case surrounding the thermal shield may be made of a material with a lower conductivity than the material used for the thermal shield. For example, the case may be made of material of thermal conductivity below 1 W/(m·K), below or equal to 0,5 W / (m·K), below or equal to below or equal to 0,2 W / (m·K).

According to an embodiment, the reference element and the battery cell may be at least substantially of the same thermal capacity and/or have at least substantially the same surface, wherein the reference element preferably is configured as a passive element. A passive element may be an element not emitting any heat.

In the context of the present disclosure, two surfaces are considered to be the same in case they do not diverge in area of equal or less than 5%, in particular 3%, more in particular equal or less than 1%. Further, two thermal capacities are considered to be the same if they do not diverge from one another more than 5%, in particular 3%, more in particular equal or less than 1%. The surface in question may be the biggest surface of the reference element and the battery cell respectively, or it may be the overall surface of all faces of the reference element and the battery cell, respectively.

According to an embodiment the at least one battery holder and/or the reference holder may include a pre-heating element adapted to pre-heat an inserted battery cell to a measurement temperature. Such a pre-heating element may be advantageously be used to accelerate thermal settlement of the battery cell to be tested.

A further aspect of the present disclosure relates to a kit comprising a test system as described hereinabove and hereinafter, at least one reference holder and at least one battery holder.

A further aspect of the present disclosure relates to a use of a test system, as described hereinabove and hereinafter, to test at least one battery unit, in particular at least one lithium ion battery.

It is noted that the use of a test system may comprise a calibration of the test system. To calibrate the test system a predefined power may be applied via a dummy battery cell for example.

Generally, any feature, function, and/or element, which is described hereinabove and hereinafter with reference to one aspect of the present disclosure, equally applies to any other aspect of the disclosure, as described above and in the following.

It should be noted that different aspects of the invention have been disclosed with reference to different subject matters. In particular, some aspects have been disclosed with reference to device claims, whereas others have been disclosed with reference to method claims. However, a person skilled in the art may derive from the above description and the following description that, unless disclosed otherwise, in addition to any combination of features belonging to one category of subject matters, any combination between features relating to different categories of subject matters is considered to be disclosed by the present disclosure. In particular, combinations between features of device claims and features of method claims may be disclosed.

Particularly, features, functions and/or elements, as described above and in the following, with reference to the sensor assembly and/or the measurement system, equally apply to the use of the sensor assembly and/or to the method as described hereinabove and in the following, and vice versa.

Further, it should be noted that whenever the term "substantially" is used, it should be therewith be understood that a certain divergence may be allowed. For example, two walls being substantially parallel may hence be parallel with a divergence of about 5% or less, in particular 3%, more in particular 1% or less in comparison with two walls being perfectly parallel, in particular in one or two dimensions. Two walls may be considered to be 100% diverging in case the surfaces of the walls are perpendicular to one another in one or two dimensions. This applies in each context where the term "substantially" is used.

These and other aspects of the invention will be apparent from and elucidated with reference to the exemplary embodiments described hereinafter.

Brief description of the drawings

In the following, the invention is described with reference to the appended figures which give background explanations and represent specific embodiments of the invention. The scope of the invention is however not limited to the specific features disclosed in the context of the figures.

Fig. 1          shows a test system according to an exemplary embodiment.

Fig. 2 to 6     show test systems according to further exemplary embodiments.

Fig. 7          shows a measurement compartment of a test system according to a further exemplary embodiment.

The figures are schematic only and not true to scale. In principle, identical or like parts, elements and/or steps are provided with identical or like reference numerals in the figures.

Detailed description of embodiments

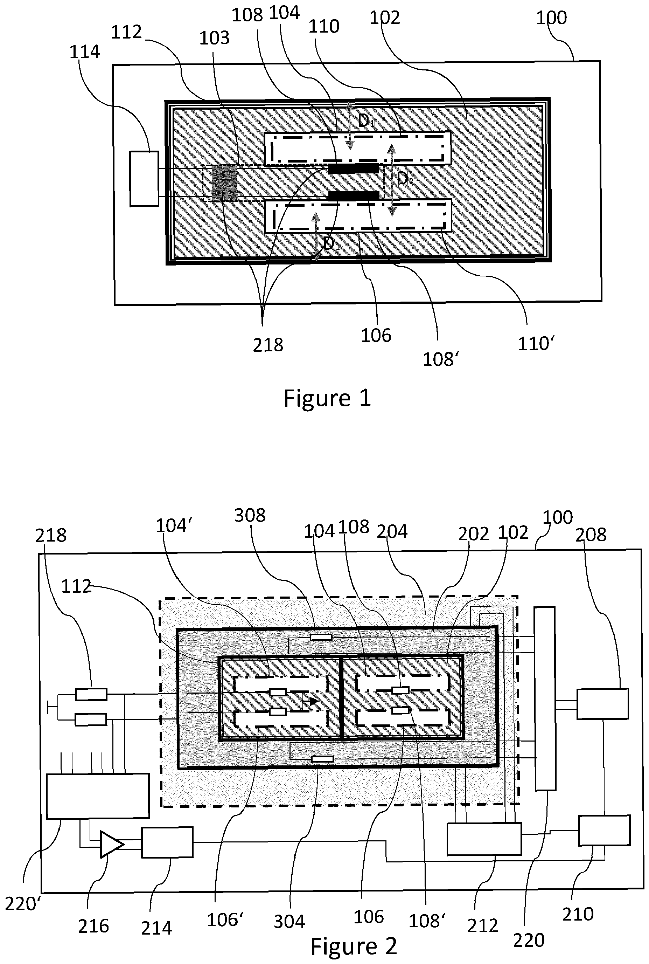

Figure 1 shows a test system 100 according to an exemplary embodiment. The test system 100, also called calorimeter, comprises a measurement compartment 102, at least one temperature sensor unit 103 and an evaluation unit 114. The measurement compartment 102 of the test system 100 of figure 1 is equipped with a battery receptacle 104 adapted for accepting at least one battery holder 110. The measurement compartment is further equipped with a reference receptacle 106 adapted for accepting at least one reference holder 110'.

The test system 100 of figure 1 comprises a temperature sensor unit 103 equipped with two temperature sensors 108, 108' (see figure 2 to 7 too) being arranged such as to be able to measure a temperature difference between a battery cell (not shown) placed in the battery holder 110 and a reference element (not shown) placed in the reference holder 110'. The evaluation unit 114 being electrically coupled to the temperature sensor unit, e.g. to two temperature sensors 108, 108' are adapted or configured to determine the said temperature difference.

It is noted that the temperature sensor unit 103 is depicted with a square dashed line, wherein this representation is solely used in order to schematically depict the temperature sensor unit 103. The electronics for the temperature measurement may for example be preferably arranged outside the measurement compartment 102. Said temperature sensor unit 103 may comprise numerous electronics, elements and/or components such as a Wheatstone bridge 218. The Wheatstone bridge 218 itself may comprises elements and/or components arranged in and/or outside the measurement compartment.

In order to mitigate temperature disturbances, which may originate from the ambient environment, a thermal shield 112 surrounding the measurement compartment 102 may be placed.

The measurement compartment 102 is configured to receive the reference holder 110' and the battery holder 110 with a snug fit. Alternatively or in addition, the at least one reference holder 110' and/or the at least one battery holder (110) may each be configured to receive the at least one battery cell T and/or the at least one reference element R with a snug fit too, respectively. From figure 1 it is apparent, that the respective receptacle 104, 106 has a rectangular shape, e.g. a cuboid volume, with a side wall and a base wall. The two receptacles 104, 106 are arranged within the measurement compartment 102 such that the respective sidewalls are at least substantially parallel to one another. In other words, the receptacle is arranged such that a cuboid battery cell and a cuboid reference element are arranged parallel to each other. It is noted, that other shapes are also conceivable. The receptacles 104, 106 together with the respective holder may define the position of the battery cell and the reference element within the test system 100.

The remaining space between the holders 110, 110' and the thermal shield 112 may be filled with a material of low thermal conductivity, such as PUR rigid foams, phenolic resin, silicate aerogel and/or vacuum insulation panels. Therefore, the emitted energy in terms of heat leads to a temperature difference between the battery cell and the reference as the heat flux from the battery cell to test system 100 is defined by the thermal conductivity of the material. A thermal gradient through the material may arise, wherein a complete compensation may not be achieved. A calibration may help establishing a relation to be applied to heat load.

It is noted that the battery cell and the reference element are absent in the test system of figure 1. The same applies to figures 2 to 6.

In general, the distance between the battery cell and/or the reference element and the thermal shield may be given by the quantity $D_1$. Wherein $D_1$ may be bounded as follow

$$\frac{s}{2 \cdot C} < D_1 < \frac{50 \cdot s}{C} \quad \text{(Eq. 1)}$$

where s is the total surface of the battery cell and/or of the reference element of all the surfaces thereof and is given in $[m^2]$. C designates the capacity of the battery cell and/or of the reference element respectively and is given in ampere-hour, i.e. [Ah].

Further, the distance between the battery cell and the reference element may be given by $D_2$. It is conceivable that $D_1 = D_2$. In general, $D_2$ may have the same boundaries as those given by eq. 1, namely

$$\frac{s}{2 \cdot C} < D_2 < \frac{50 \cdot s}{C}. \quad \text{(Eq. 2)}$$

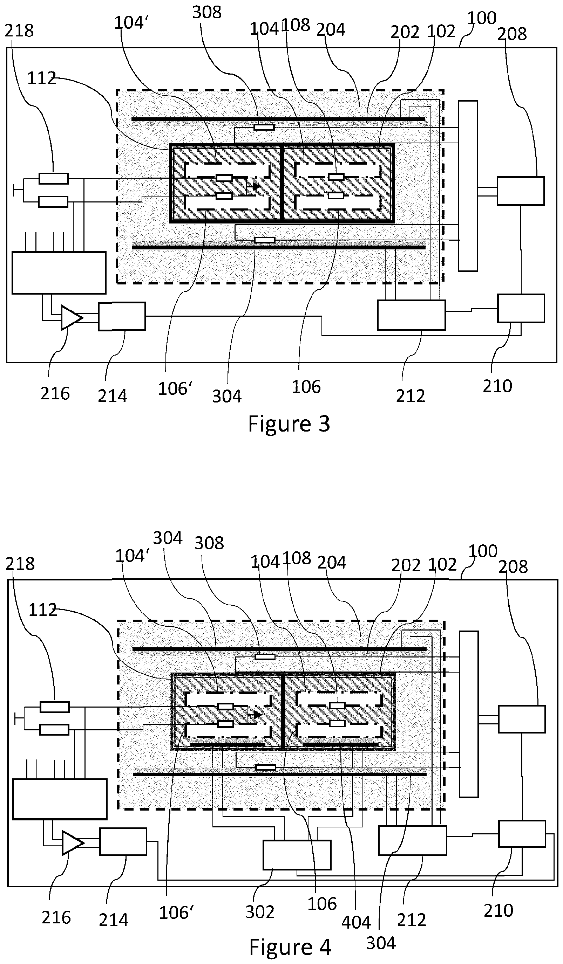

Figures 2 to 6 show further exemplary test systems 100. Unless otherwise specified, the test system of figure 2 comprises the same elements and/or components as the test system of figure 1. The same applies to figures 3 to 6 in relation with any one of previously described figures 1 to 5.

The test system 100 of figure 2 comprises multiple measurement compartments 102, each measurement compartment comprising a respective battery receptacle 104, 104' and a respective reference receptacle 106, 106'.

The test system 100 of figure 2 further comprises different layers being defined by the different material used around the battery receptacles 104, 104' and the reference receptacles 106, 106'. A first layer may be defined by the material filling the measurement compartment 102 (an example material may be an Isolating material such as rigid PUR Foam, which has a Low Thermal conductivity and defines a mechanical position of receptacles). Around the measurement compartment 102, a thermal shield 112 is arranged, defining a second layer (an example material may be aluminium with high thermal conductivity). A third layer may be seen as the space, e.g. the volume, between the thermal shield 112 and the temperature control unit 202 (PUR Foam as first layer). Said third layer may also be called the isolation layer. A fourth layer may be seen as a cover layer made of isolating material 204 (e.g. PUR Foam being e.g. attached to a case). The fourth layer may also be seen as a case surrounding the thermal shield 112. The fourth layer, i.e. the case, hence isolates most of the test system such as to reduce the impact of the variation of the ambient temperature.

It is noted that an operating range for the battery cell may lie between the ambient temperature and approx. 60,0 degrees Celsius. Higher temperatures may show different thermal signals, since other processes may dominate within the battery cell.

The temperature control unit 202 of figure 2 comprises at least one temperature sensor 308 and a heating element configured as a housing around the thermal shield. Further, the temperature control unit 202 comprises a multiplexer 220, which may be used to operate multiple temperature sensors with a single electronic. The multiplexer may actuate and/or control the temperature control unit 202 at predefined time intervals or events.

A further multiplexer 220' may be provided, which actuates the temperature sensor unit(s) 103, assigned to the battery cell and/or the reference element. Heating elements may be operated by a separate electronics. There may be provided individual electronics for the Wheatstone bridge, the temperature recording of temperature control unit and the power supply of the temperature control unit. Solely the temperature control unit and Wheatstone bridge may be multiplexed in case of multiple sensors.

Alternatively, as it is apparent from figure 3 for example, the heating element(s) of the temperature control unit 202 are arranged in parallel to the side walls of the respective receptacle.

Overall, different embodiments of the heating element(s) are possible. The heating element of figure 2 completely houses the thermal shield 112. Such a heating element may be seen as an active thermal shield. The heating element of figure 2 may also ring around the thermal shield 112, however not covering the top and the bottom thereof. In the test system 100 of figure 3, 2D heating elements 304 are arranged in such a way that disturbances in direction of the largest areas of the battery cell may be reduced. Hence, the heating elements 304 are arranged with their largest surface parallel to the largest surface of the battery cell. In this case, the heating elements have a larger surface than the respective surface of the thermal shield 112. In a further embodiment, a pre-heating elements 404 are arranged within the thermal shield (see figure 4) and may be used to accelerate thermal settlement of the battery cell to be tested.

In general, the heating element(s) 304 and the surrounding isolating material 204 may be scaled according to the size of the thermal shield 112. It is noted that the heating element 304 may be circumferentially formed and completely surround the thermal shield 112.

The test system 100 may further be provided with different electrical components such as power supply units 302, 212 a micro-controller 210, one or more analog-digital converter 214, 208 and an amplifier 216. Although not shown in figures 2 to 6, the test system 100 comprises an evaluation unit 114. It is noted that the evaluation unit 114 may comprises different electronic components. Alternative or in addition, the evaluation unit 114 may be part of a computer or a controller (not shown).

The test systems 100 of figures 2 to 6 are all equipped with a Wheatstone bridge 218. The Wheatstone bridge is in general a component of the temperature sensor unit 103, and is electrically coupled to the respective sensor of the corresponding 108, 108' temperature sensor unit 103. Hence, the resulting temperature difference between the battery cell and the reference element is measured using temperature sensors 108, 108' and a Wheatstone bridge 218 of the temperature sensor unit(s).

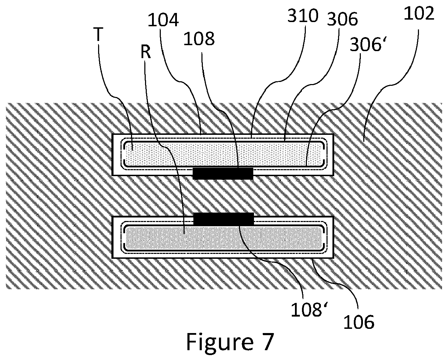

Further, the temperature sensor unit 103 may comprise one or more sensor plate (not shown) with a temperature sensor attached to an inside wall defined by the reference holder 110' and/or the battery holder 110 (see e.g. figure 7). It is noted that the temperature sensors 108, 108' may be PT1000 sensors.

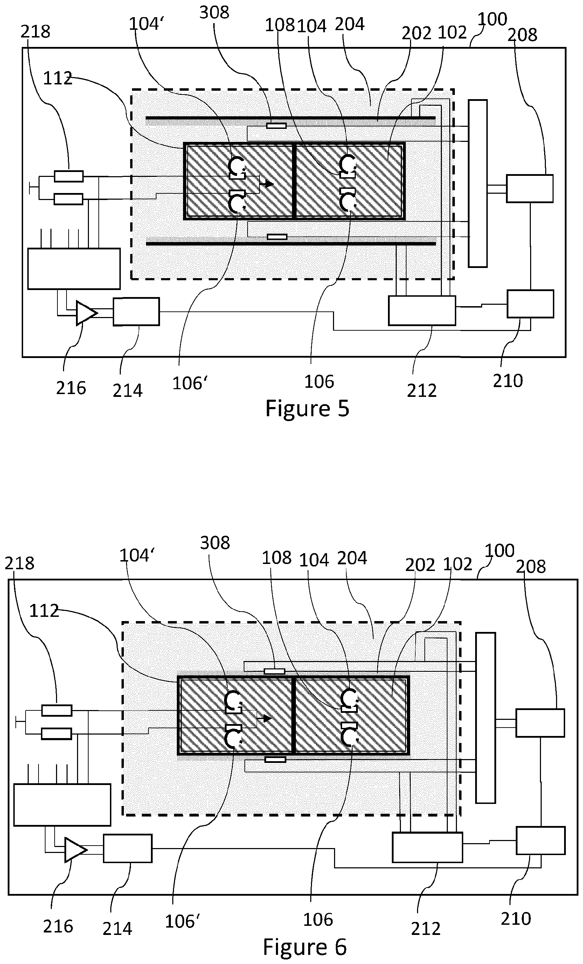

As it is apparent from figures 5 and 6 the battery receptacle and the reference receptacle may have alternative shapes than a cuboid shape. The receptacles 104, 106 may for example be configured to be loaded with cylindrical shaped battery cell and/or reference element. In particular, figure 6 shows a version with a shield which may be heated actively as well as passively.

Figure 7 shows an exemplary embodiment of a measurement compartment 102 of a test system 100 according to any one of the figures 1 to 6. Unless otherwise specified, the measurement compartment 102 of figure 7 comprises the same elements and/or components as the measurement compartment 102 of figures 1 to 6.

In figure 7, the measurement compartment is shown in a state in which the battery receptacle 104 and the reference receptacle 106 are actually loaded or filed with a battery cell T and a reference element R. As it is apparent from figure 7, the battery holder 110 comprises two elements being two half-shells 306, 306'. The two half-shells 306, 306' may be tighten closely against the battery cell T using a spring-element 310 such as an elastic for example. In other words, the spring-element 310 is configured to pull the battery holder (or correspondingly the reference holder) against each other such that the two half-shells are pushed against the battery cell T. As a temperature sensor 108 of the temperature sensor unit 103 may be arranged in an inside wall of one of the two half-shell 306, 306', this may allow keeping the temperature sensor as close as possible to the battery cell R (or correspondingly to the reference element R). The same structure and/or elements are also used with the reference element R.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

List of reference signs

| | |
|---|---|
| 100 | test system |
| 102 | measurement compartment |
| 103 | temperature sensor unit |
| 104, 104' | battery receptacle |
| 106, 106' | reference receptacle |
| 108, 108', 308 | temperature sensor |
| 110, 110' | battery and/or reference holder |
| 112 | thermal shield |
| 114 | evaluation unit |
| 202 | temperature control unit |
| 204 | isolating material |
| 208 | analog-digital converter |
| 210 | micro-controller |
| 212 | power supply unit |
| 214 | analog-digital converter |
| 216 | amplifier |
| 218 | Wheatstone bridge |
| 220,220' | multiplexer |
| 302 | power supply |
| 304 | heating element |
| 404 | pre-heating element |
| 306, 306' | half-shell |
| 310 | spring-element |
| T | battery cell |
| R | reference element |
| $D_1$ | distance between battery cell and/or reference element and thermal shield |
| $D_2$ | distance between battery cell and reference element |

**Claims**

1. Test system (100) for at least one battery cell (T), comprising:

    • At least one measurement compartment (102) with at least one battery receptacle (104) adapted for accepting at least one battery holder (110) and at least one reference receptacle (106) adapted for accepting at least one reference holder (110');
• At least one temperature sensor unit (103) arranged to measure a temperature difference between at least one battery cell (T) in the at least one battery holder (110) and at least one reference element (R) in the at least one reference holder (110');
• An evaluation unit (114) electrically coupled to the at least one temperature sensor unit (103) and adapted to determine the temperature difference between the at least one battery cell (T) in the at least one battery holder (110) and the at least one reference element (R) in the at least one reference holder during (110') a measurement;

**characterized by**
a thermal shield (112) at least partially shielding and/or surrounding the at least one measurement compartment (102) adapted to mitigate temperature disturbances in the at least one measurement compartment (102).

2. The test system (100) of claim 1,
**characterized by**
a temperature control unit (202) comprising at least one heating element (304) adapted to control a measurement temperature in the at least one measurement compartment (102) during a measurement.

3. The test system (100) of any of the preceding claims,
**characterized in that**
the at least one reference holder (110') and/or the at least one battery holder (110) are each configured to receive the at least one battery cell (T) and/or the at least one reference element (R) with a snug fit, respectively.

4. The test system (100) of any of the preceding claims,
**characterized in that**,
the at least one reference receptacle (106) and/or the at least one battery receptacle (104) each comprise a side wall and a base wall, wherein the at least one battery receptacle and the at least one reference receptacle are arranged such that the side walls are at least substantially parallel to one another, wherein the side walls preferably form the largest surfaces of the respective receptacle (104, 106).

5. The test system (100) of any of the preceding claims,
**characterized by**
at least one battery holder (110) adapted to be inserted into the at least one battery receptacle (104) and/or at least one reference holder (110') adapted to be inserted into the at least one reference receptacle (106).

6. The test system (100) of any of the preceding claims,

**characterized in that**
the temperature sensor unit (103) comprises at least one sensor plate with a temperature sensor (108) attached to an inside wall defined by the reference holder (110') and/or the battery holder (110); and/or
the temperature sensor unit (103) comprises a wheatstone bridge (218) electrically coupled to a/the sensor plates of the reference and/or battery holders (110, 110'), wherein the sensor plates in particular each comprise at least one resistance based temperature sensor (108, 108').

7. The test system of any of the preceding claims, in particular of claim 5,
**characterized in that**
the at least one battery holder (110) and/or the at least one reference holder (110') comprise two half-shells (306, 306') with a bias-element (310) adapted to pull the half-shells (306, 306') against each other such that a/the temperature sensor (108, 108') is pushed against a reference element and/or battery cell when inserted into the battery holder (110) or reference holder (110'), respectively.

8. The test system (100) of any of the preceding claims

**characterized in that**
the thermal shield (112) is of a material of thermal conductivity above 40 W/ (m·K); and/or
a/the space between the thermal shield (112) and the at least one reference receptacle (106) and at least one battery receptacle (104) is filled with a material of low thermal conductivity, in particular polyurethane based foam.

9. The test system (100) of any of the preceding claims, in particular according to claim 8,
**characterized in that**
the at least one reference receptacle (106) and the at least one battery receptacle (104) are arranged symmetrically to a plane at least substantially parallel to side walls of the receptacles through the center of the measurement compartment (102) in the at least one measurement compartment with the thermal shield (112) surrounding the at least one measurement compartment (102).

10. The test system (100) of any of the preceding claims, in particular according to any of the claims 8 to 9,

**characterized in that**

the heating element (304) is arranged at least substantially in parallel to the side walls of the receptacles (104, 106); and/or

the heating element (304) is integrated in the thermal shield (112); and/or an isolation layer is arranged between the thermal shield (112) and the heating element (304).

11. The test system (100) of any of the preceding claims, **characterized in that**
the temperature control unit (202) is adapted to activate a temperature sensor (308") and/or the heating element (304).

12. The test system (100) of any of the preceding claims, **characterized in that**
the reference element and the battery cell are of at least substantially the same thermal capacity and/or have at least substantially the same surface, wherein the reference element preferably is configured as a passive element.

13. The test system (100) of any of the preceding claims **characterized in that**
the at least one battery holder (110) and/or the reference holder (110') includes a pre-heating element (404) adapted to pre-heat an inserted battery cell to a measurement temperature.

14. A kit comprising a test system of any of the preceding claims, at least one reference holder and at least one battery holder.

15. Using a test system (100) according to any of the claims 1 to 13 to test at least one battery cell, in particular at least one lithium ion battery.

Figure 1

Figure 2

Figure 3

Figure 4

Figure 5

Figure 6

Figure 7

Europäisches
Patentamt

European
Patent Office

Office européen
des brevets

# EUROPEAN SEARCH REPORT

**Application Number**

EP 22 16 2555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/156750 A1 (RUSSELL DONALD J [US] ET AL) 27 May 2021 (2021-05-27) * paragraph [0029] – paragraph [0048]; figures 1-8 * | 1-15 | INV. G01K17/00 G01K17/04 G01N25/48 |
| A | EP 2 684 016 A1 (ALLIANCE SUSTAINABLE ENERGY [US]) 15 January 2014 (2014-01-15) * paragraph [0044] – paragraph [0100]; figures 1-6 * | 1-15 | |
| A | PESARAN A A ET AL: "A unique calorimeter-cycler for evaluating high-power battery modules", BATTERY CONFERENCE ON APPLICATIONS AND ADVANCES, 1998., THE THIRTEENTH ANNUAL LONG BEACH, CA, USA 13-16 JAN. 1998, NEW YORK, NY, USA,IEEE, US, 13 January 1998 (1998-01-13), pages 127-131, XP010267655, DOI: 10.1109/BCAA.1998.653854 ISBN: 978-0-7803-4098-5 * page 128 – page 129; figures 2-3 * | 1-15 | |
| A | CN 113 432 760 A (UNIV JILIANG CHINA) 24 September 2021 (2021-09-24) * figure 1 * | 1-15 | TECHNICAL FIELDS SEARCHED (IPC) G01K G01N |

The present search report has been drawn up for all claims

| Place of search | Date of completion of the search | Examiner |
|---|---|---|
| The Hague | 9 September 2022 | Rosello Garcia, M |

EPO FORM 1503 03.82 (P04C01)

## ANNEX TO THE EUROPEAN SEARCH REPORT
## ON EUROPEAN PATENT APPLICATION NO.

EP 22 16 2555

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2022

| Patent document cited in search report | | Publication date | Patent family member(s) | | Publication date |
|---|---|---|---|---|---|
| US 2021156750 | A1 | 27-05-2021 | CN | 114729908 A | 08-07-2022 |
| | | | EP | 4062159 A1 | 28-09-2022 |
| | | | US | 2021156750 A1 | 27-05-2021 |
| | | | WO | 2021101710 A1 | 27-05-2021 |
| EP 2684016 | A1 | 15-01-2014 | CN | 103492846 A | 01-01-2014 |
| | | | EP | 2684016 A1 | 15-01-2014 |
| | | | JP | 5908927 B2 | 26-04-2016 |
| | | | JP | 2014517908 A | 24-07-2014 |
| | | | US | 2014003460 A1 | 02-01-2014 |
| | | | WO | 2012125491 A1 | 20-09-2012 |
| CN 113432760 | A | 24-09-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112394084 A
- WO 2011060768 A1
- WO 2021101710 A1
- CH 711926 A1
- DE 202019101393 U1